# EUROPEAN PATENT SPECIFICATION

(11) **EP 2 749 479 B1**
(45) Date of publication and mention of the grant of the patent: **30.08.2017**
(21) Application number: 12825166.7
(22) Date of filing: 09.08.2012
(51) Int. Cl.: B62D 21/02, B62D 21/05

(54) **KICK-UP FRAME CONNECTION STRUCTURE**
KICKUP-RAHMENVERBINDUNGSSTRUKTUR
STRUCTURE DE RACCORDEMENT DE CHÂSSIS SUPÉRIEUR

(30) Priority: 24.08.2011 JP 2011182803
(43) Date of publication of application: 02.07.2014
(73) Proprietor: Toyota Shatai Kabushiki Kaisha, Kariya-shi, Aichi 448-8666 (JP)
(72) Inventor: TAKAO, Junko, Kariya-shi Aichi 448-8666 (JP); KAMIMURA, Kenichi, Kariya-shi Aichi 448-8666 (JP); MIZUSAKI, Takao, Kariya-shi Aichi 448-8666 (JP); ARIYOSHI, Ryousuke, Kariya-shi Aichi 448-8666 (JP); ITO, Atsushi, Kariya-shi Aichi 448-8666 (JP)
(74) Representative: Intès, Didier Gérard André
(86) International application number: PCT/JP2012/070372
(87) International publication number: WO 2013/027602

(56) References cited:
- WO-A1-2011/074326
- JP-A- H0 624 355
- JP-A- H05 305 878
- JP-A- H11 348 835
- JP-A- 2001 180 516
- JP-A- 2002 331 958
- JP-A- 2006 088 886
- JP-A- 2006 137 408
- US-A- 5 114 183
- US-A1- 2006 061 142
- US-A1- 2011 001 337
- US-B1- 6 299 240

## Description

### TECHNICAL FIELD

The present invention relates to a kick-up frame connection structure in a vehicle such as an automobile.

### BACKGROUND ART

Conventionally, one such kick-up frame connection structure has been proposed in, for example, Patent Document 1. The structure includes a cross member arranged between and connected to a pair of, right and left, side frames extending in the forward-rearward direction of a vehicle body. A kick-up portion is formed integrally with a rear portion of each of the side frames. Each of the kick-up portions is curved upward and extends at an inwardly offset position with respect to a corresponding one of the side frames in the widthwise direction of the vehicle body. A reinforcement member is attached to a portion including both the side frame and the kick-up portion. Another example of kick-up frame connection structure is disclosed in Patent Document 2.

### PRIOR ART DOCUMENT

Patent Document 1: Japanese Laid-Open Patent Publication No. 2001-180516
Patent Document 2: US 6299240

### SUMMARY OF THE INVENTION

### Problems that the Invention is to Solve

As it has been described, in the conventional structure, each kick-up portion, which is formed integrally with the corresponding side frame, is arranged at an inwardly offset position with respect to the side frame in the widthwise direction of the vehicle body. As a result, stress from wheels concentrates on the kick-up portions, causing torsion of the body frame of the vehicle. To prevent this problem, the kick-up portions and the side frames each as a whole must be formed using high-strength material or with increased thicknesses to improve the strength of these components. This increases the weight of the vehicle body frame and raises the cost for the material, thus increasing the manufacturing costs.

Also, in the conventional structure, each kick-up portion must be formed by bending in such a shape that the kick-up portion is curved upward and arranged inwardly offset with respect to the corresponding side frame in the widthwise direction of the vehicle body. Such bending involves use of a large-sized special machine tool that is capable of performing three-dimensional bending. This raises the machining cost and thus further increases the manufacturing costs.

Accordingly, it is an objective of the present invention to provide a kick-up frame connection structure capable of reducing the weight and costs of a side frame and a kick-up frame through effective reinforcement of a portion at which the side frame is connected to the kick-up frame without using high-strength material for the side frame and the kick-up frame or without increasing the thickness of each of the side frame and the kick-up frame. The kick-up frame connection structure is also capable of reducing the costs for machining the side frame and the kick-up frame by allowing use of a small-sized general-purpose machine tool that can be employed for two-dimensional bending to form the side frame and the kick-up frame.

### Means for Solving the Problems

To achieve the foregoing objective and in accordance with one aspect of the present invention, a kick-up frame connection structure for connecting a pair of, right and left, kick-up frames to a pair of, right and left, side frames extending in a forward-rearward direction of a vehicle body is provided. The kick-up frame connection structure includes a cross member for connecting rear end portions of the side frames to each other and a pair of reinforcement members. The right and left kick-up frames are connected to the cross member at positions inwardly offset with respect to the right and left side frames, respectively, in a widthwise direction of the vehicle body. Each of the reinforcement members connects a rear end portion of a corresponding one of the side frames, a corresponding one of right and left end portions of the cross member, and a front end portion of a corresponding one of the kick-up frames to one another.

In the above-described kick-up frame connection structure, each reinforcement member firmly reinforces a portion at which the rear end portion of the corresponding side frame, the corresponding right or left end portion of the cross member, and the front end portion of the corresponding kick-up frame are connected together. As a result, unlike the conventional configuration in which each kick-up portion is formed integrally with a corresponding one of side frames, it is unnecessary to form the kick-up portions and the side frames each as a whole using high-strength material or with increased thicknesses. The weight of each side frame and the weight of each kick-up frame are thus reduced and the cost for material is lowered. Also, since each kick-up frame is formed independently from the corresponding side frame, the side frame and the kick-up frame are formed using a small-sized general-purpose machine tool that can be employed for two-dimensional bending. This reduces the costs for machining the side frames and the kick-up frames.

The side frames and the kick-up frames each include an upper wall, a lower wall, and a side wall by which the upper wall is connected to the lower wall. Each of the reinforcement members have a first joint portion, a second joint portion, and a third joint portion. The first joint portion is connected to the upper wall, the lower wall, and the side wall of a corresponding one of the side frames in the rear end portion of the side frame. The second joint portion is connected to the upper wall, the lower wall, and the side wall of a corresponding one of the kick-up frames in the front end portion of the kick-up frame. The third joint portion is connected to an upper portion and a lower portion of the cross member in a corresponding one of the right and left end portions of the cross member.

In this configuration, each reinforcement member, which has the first, second, and third joint portions, firmly reinforces the portion at which the rear end portion of the corresponding side frame, the corresponding right or left end portion of the cross member, and the front end portion of the corresponding kick-up frame are connected together.

### Effects of the Invention

Accordingly, the present invention effectively decreases the weight of each side frame and the weight of each kick-up frame and reduces the cost for material and machining, thus saving the manufacturing costs.

### BRIEF DESCRIPTION OF THE DRAWINGS

Fig. 1 is a perspective view showing a kick-up frame connection structure according to an embodiment of the present invention;
Fig. 2 is a perspective view showing the connection structure illustrated in Fig. 1 with reinforcement members disassembled;
Fig. 3 is an enlarged perspective view showing a main part of the connection structure including an attachment portion of a reinforcement member; and
Fig. 4 is a perspective view showing the attachment portion of the reinforcement member viewed from below a vehicle body frame.

### MODES FOR CARRYING OUT THE INVENTION

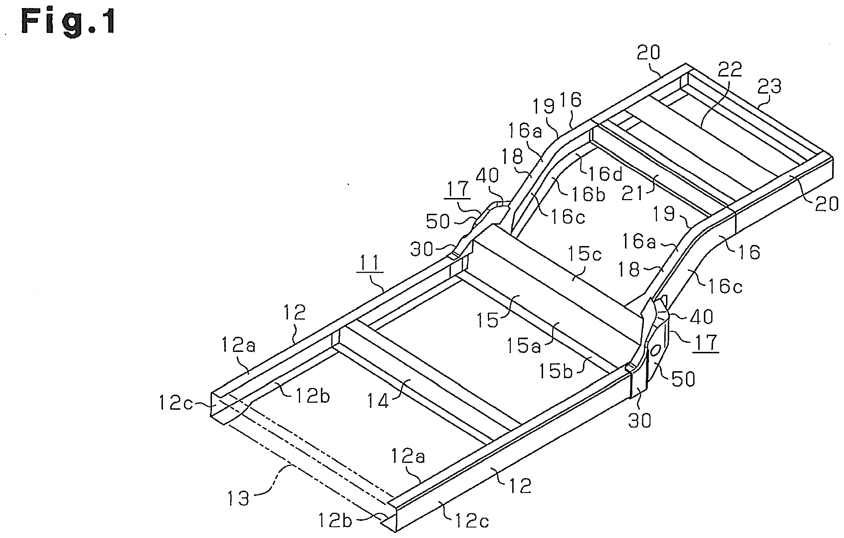

A kick-up frame connection structure according to one embodiment of the present invention will now be described with reference to Figs. 1 to 4.

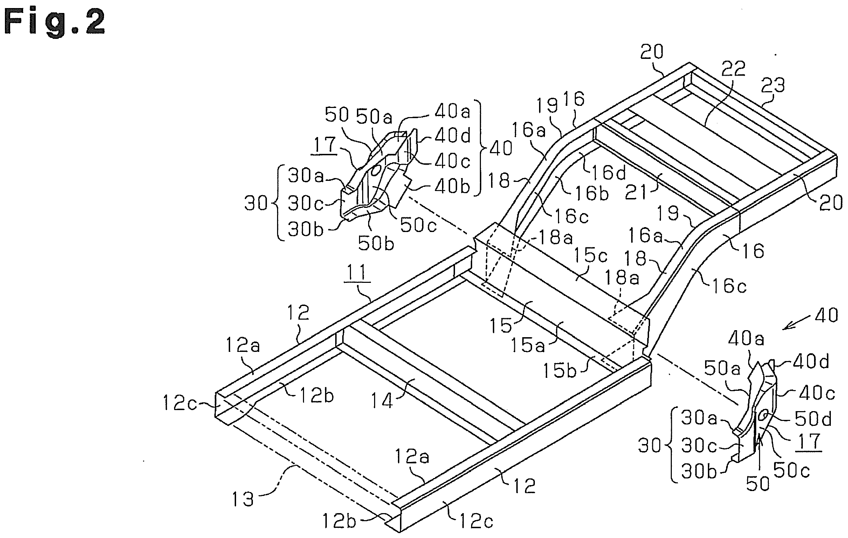

As shown in Figs. 1 and 2, a vehicle body frame 11 of the illustrated embodiment includes a pair of, right and left, parallel side frames 12, which extends in the forward-rearward direction. Each of the side frames 12 is made of steel. Each side frame 12 includes an upper wall 12a, a lower wall 12b, and a side wall 12c, which connects the upper and lower walls 12a, 12b to each other. The side frame 12 has a substantially U-shaped cross section. A front cross member 13, a middle cross member 14, and a rear cross member 15 are arranged between and fixedly connected to the side frames 12 through welding. The cross members 13, 14, 15 are made of steel.

The cross members 13, 14 each have a hat-shaped cross section. The rear cross member 15, which is arranged between and fixedly connected to rear end portions of the side frames 12, includes a middle portion 15a, a lower portion 15b, and an upper portion 15c. The middle portion 15a extends upright in the upward-downward direction. The lower portion 15b extends forward from the lower end of the middle portion 15a and is bent perpendicularly. The upper portion 15c extends rearward and diagonally upward from the upper end of the middle portion 15a and is bent in an inclined manner. The rear cross member 15 has a substantially Z-shaped cross section.

A pair of, right and left, kick-up frames 16, which are curved upward, are fixedly connected to a rear portion of the rear cross member 15 through welding. The right and left kick-up frames 16 are arranged inwardly offset with respect to the right and left side frames, respectively, in the widthwise direction of the body frame 11. The kick-up frames 16 are made of steel. Each of the kick-up frames 16 includes an upper wall 16a, a lower wall 16b, and a side wall 16c, which connects the upper and lower walls 16a, 16b to each other. Each kick-up frame 16 has a substantially U-shaped cross section. The kick-up frame 16 has an opening 16d, which faces inward in the widthwise direction of the vehicle body.

Each kick-up frame 16 has an inclined portion 18 and an extended portion 20. The inclined portion 18 extends diagonally upward from the rear cross member 15. The extended portion 20 extends rearward substantially in a horizontal direction from the inclined portion 18 through a curved portion 19. The extended portions 20 of the kick-up frames 16 are connected to each other through cross members 21, 22, 23, which are made of steel.

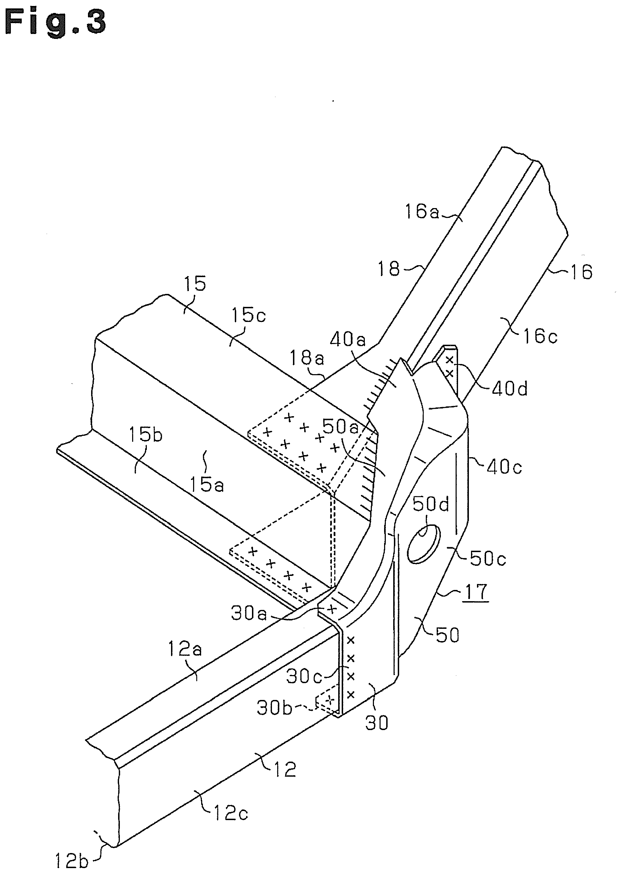

With reference to Figs. 2 and 3, a basal portion of the upper wall 16a of each kick-up frame 16 is enlarged compared with the other portions of the upper wall 16a, thus forming an enlarged portion 18a. Each of the enlarged portions 18a is arranged below the upper portion 15c of the rear cross member 15 in an overlapped manner and spot-welded fixedly to the rear cross member 15. In Figs. 2, 3, and 4, the marks "x" represent the spot-welded spots.

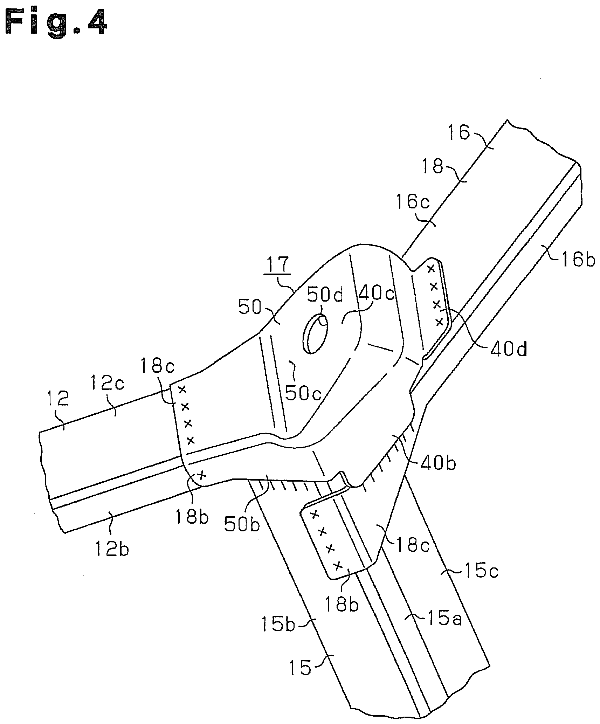

As shown in Fig. 4, a basal portion of the lower wall 16b of each kick-up frame 16 is enlarged compared with the other portions of the lower wall 16b, thus forming an enlarged portion 18c. Each of the enlarged portions 18c has a distal end that is bent to be arranged below the lower portion 15b of the rear cross member 15 in an overlapped manner. The distal end thus configures a joint piece 18b. The joint pieces 18b are spot-welded fixedly to the lower portion 15b of the rear cross member 15.

As illustrated in Figs. 1 to 4, a pair of reinforcement members 17 is fixed to the right and left sides of the body frame 11. Each of the reinforcement members 17 connects a rear end portion of a corresponding one of the side frames 12, a corresponding one of right and left end portions of the rear cross member 15, and a front end portion of a corresponding one of the kick-up frames 16 together. Each reinforcement member 17 is molded from a steel plate. The right and left reinforcement members 17 are symmetrical to each other with respect to the center line extending in the forward-rearward direction of the vehicle body.

Each reinforcement member 17 has a first joint portion 30, a second joint portion 40, and a third joint portion 50. The first joint portion 30 is connected to the rear end portion of the corresponding side frame 12. The second joint portion 40 is connected to the front end portion of the corresponding kick-up frame 16. The third joint portion 50 is connected to the corresponding right or left end portion of the rear cross member 15.

Specifically, the first joint portion 30 of each reinforcement member 17 includes an upper wall 30a, a lower wall 30b, and a side wall 30c, which connects the upper wall 30a and the lower wall 30b to each other. Each first joint portion 30 has a U-shaped cross section. The upper wall 30a, the lower wall 30b, and the side wall 30c of each first joint portion 30 are overlapped with the upper wall 12a, the lower wall 12b, and the side wall 12c, respectively, in the rear end portion of the corresponding side frame 12 from outside and spot-welded to the respective walls 12a, 12b, 12c.

The third joint portion 50 of each reinforcement member 17 includes an upper wall 50a, a lower wall 50b, and a side wall 50c, which are formed integrally with the upper wall 30a, the lower wall 30b, and the side wall 30c of the first joint portion 30, respectively. Each of the third joint portions 50 has a U-shaped cross section. In each third joint portion 50, the upper wall 50a and the lower wall 50b are overlapped with and arc-welded to the upper surface of the upper portion 15c and the lower surface of the lower portion 15b of the rear cross member 15, respectively. In Figs. 3 and 4, the hatched areas represent the arc-welded portions. The right end portion and the left end portion of the rear cross member 15 are each covered by the upper wall 50a, the lower wall 50b, and the side wall 50c of the third joint portion 50 of the corresponding reinforcement member 17. The side wall 50c of each third joint portion 50 has a support hole 50d, which pivotally supports a non-illustrated suspension device to which a wheel is attached.

The second joint portion 40 of each reinforcement member 17 includes an upper wall 40a, a lower wall 40b, and a side wall 40c, which connects the upper wall 40a and the lower wall 40b to each other. Each of the second joint portions 40 has a U-shaped cross section. The upper wall 40a, the lower wall 40b, and the side wall 40c of each second joint portion 40 are formed integrally with the upper wall 50a, the lower wall 50b, and the side wall 50c of the third joint portion 50, respectively.

With reference to Figs. 3 and 4, the upper wall 40a and the lower wall 40b of each second joint portion 40 are arc-welded fixedly to the upper surface of the enlarged portion 18a and the lower surface of the enlarged portion 18c of the corresponding kick-up frame 16, respectively. The side wall 40c of the second joint portion 40 has a bent piece 40d, which is overlapped with the outer side of the side wall 16c of the kick-up frame 16, as illustrated in Fig. 4. The bent piece 40d is spot-welded fixedly to the side wall 16c of the corresponding kick-up frame 16.

In the kick-up frame connection structure configured as described above, each reinforcement member 17, which includes the first, second, and third joint portions 30, 40, 50 and is arranged at a corresponding one of the right and left sides of the vehicle body frame 11, reinforces a portion at which the rear end portion of the corresponding side frame 12, the corresponding right or left end portion of the cross member 15, and the front end portion of the corresponding kick-up frame 16 are connected together.

Specifically, the upper wall 30a, the lower wall 30b, and the side wall 30c of the first joint portion 30 of each reinforcement member 17 are fixed to the outer sides of the upper wall 12a, the lower wall 12b, and the side wall 12c of the corresponding side frame 12, respectively. The upper wall 50a and the lower wall 50b of the third joint portion 50, which is the middle portion of each reinforcement member 17, are fixed to the upper portion 15c and the lower portion 15b of the rear cross member 15, respectively. The upper wall 40a and the lower wall 40b of the second joint portion 40 of each reinforcement member 17 are fixed to the enlarged portion 18a of the upper wall 16a and the enlarged portion 18c of the lower wall 16b, respectively, which are located in the front end portion of the corresponding kick-up frame 16. The bent piece 40d is fixed to the outer surface of the side wall 16c, which is located in the front end portion of the kick-up frame 16.

As a result, even if stress from a wheel concentrates on a portion in the vicinity of the portion at which each side frame 12 is connected to the cross member 15 and the corresponding kick-up frame 16, torsion does not occur in the body frame 11.

Accordingly, the illustrated embodiment has the advantages described below.
(1) The kick-up frame connection structure of the illustrated embodiment includes the cross member 15, which connects the rear end portions of the two, or right and left, side frames 12 to each other, and the two reinforcement members 17. Each of the right and left kick-up frames 16 is connected to the cross member 15 at a position inwardly offset with respect to the corresponding right or left side frame 12 in the widthwise direction of the vehicle body. Each reinforcement member 17 connects the rear end portion of the corresponding side frame 12, the corresponding right or left end portion of the cross member 15, and the front end portion of the corresponding kick-up frame 16 to one another.
   Each reinforcement member 17 thus firmly reinforces the portion at which the rear end portion of the corresponding side frame 12, the corresponding right or left end portion of the cross member 15, and the front end portion of the corresponding kick-up frame 16 are connected together. As a result, unlike the conventional configuration in which each kick-up portion is formed integrally with a corresponding one of side frames, it is unnecessary to form the kick-up portions and the side frames each as a whole using high-strength material or with increased thicknesses. The weight of each side frame 12 and the weight of each kick-up frame 16 are thus reduced and the cost for material is lowered. Also, since each kick-up frame 16 is formed independently from the corresponding side frames 12, the side frame 12 and the kick-up frame 16 are formed using a small-sized general-purpose machine tool that can be employed for two-dimensional bending. This reduces the costs for machining the side frames 12 and the kick-up frames 16. As a result, the costs for manufacturing the body frame 11 are reduced.
(2) Each side frame 12 includes the upper wall 12a, the lower wall 12b, and the side wall 12c. Each kick-up frame 16 includes the upper wall 16a, the lower wall 16b, and the side wall 16c. Each reinforcement member 17 has the first joint portion 30, the second joint portion 40, and the third joint portion 50. The first joint portion 30 is connected to the upper wall 12a, the lower wall 12b, and the side wall 12c of the corresponding side frame 12 in the rear end portion of the side frame 12. The second joint portion 40 is connected to the upper wall 16a, the lower wall 16b, and the side wall 16c of the corresponding kick-up frame 16 in the front end portion of the kick-up frame 16. The third joint portion 50 is connected to the upper portion and the lower portion of the cross member 15 in the corresponding right or left end portion of the cross member 15. As a result, each reinforcement member 17, which includes the first, second, and third joint portions 30, 40, 50, firmly reinforces a portion at which the rear end portion of the corresponding side frame 12, the corresponding right or left end portion of the cross member 15, and the front end portion of the corresponding kick-up frame 16 are connected together.

The illustrated embodiment may be modified to the forms described below.

The shape of each reinforcement member 17, or, more specifically, the configurations of the first, second, and third joint portions 30, 40, 50, may be changed as needed.

In the illustrated embodiment, each reinforcement member 17 is either spot-welded or arc-welded fixedly to the corresponding side frame 12, the rear cross member 15, and the corresponding kick-up frame 16. However, such fixation of the reinforcement members 17 is not restricted to the embodiment. That is, the reinforcement members 17 may be fixed using fastening means such as bolts. Alternatively, in the illustrated embodiment, the spot-welded portions may be changed to the arc-welded portions and the arc-welded portions may be changed to the spot-welded portions by, for example, modifying the shape of each reinforcement member 17 as needed.

## Claims

1. A kick-up frame connection structure for connecting a pair of, right and left, kick-up frames (16) to a pair of, right and left, side frames (12) extending in a forward-rearward direction of a vehicle body (11), the kick-up frame (16) connection structure including a cross member (15) for connecting rear end portions of the side frames (12) to each other and a pair of reinforcement members (17), the kick-up frame connection structure being **characterized in that**
the right and left kick-up frames (16) are connected to the cross member (15) at positions inwardly offset with respect to the right and left side frames (12), respectively, in a widthwise direction of the vehicle body (11),
each of the reinforcement members (17) is connected to a rear end portion of a corresponding one of the side frames (12), a corresponding one of right and left end portions of the cross member (15), and a front end portion of a corresponding one of the kick-up frames (16), and
a position at which one of the reinforcement members (17) is connected to the cross member (15), a position at which the same reinforcement member (17) is connected to a corresponding one of the kick-up frames (16), and a position at which the same kick-up frame (16) is connected to the cross member (15) are arranged at different positions as viewed from above,
the kick-up frame connection structure being **characterized in that**
the side frames (12) and the kick-up frames (16) each include an upper wall, a lower wall, and a side wall by which the upper wall is connected to the lower wall, and
each of the reinforcement members (17) has a first joint portion, a second joint portion, and a third joint portion, the first joint portion being connected to the upper wall, the lower wall, and the side wall of a corresponding one of the side frames (12) in the rear end portion of the side frame (12), the second joint portion being connected to the upper wall, the lower wall, and the side wall of a corresponding one of the kick-up frames (16) in the front end portion of the kick-up frame (16), and the third joint portion being connected to an upper portion and a lower portion of the cross member (15) in a corresponding one of the right and left end portions of the cross member (15).

2. The kick-up frame connection structure according to claim 1, **characterized in that** each reinforcement member (17) covers a corresponding one of the right and left end portions of the cross member (15).

## Patentansprüche

1. Verbindungskonstruktion für gekröpfte Rahmen zum Verbinden eines Paars aus einem rechten und einem linken gekröpften Rahmen (16) mit einem Paar aus einem rechten und einem linken Seitenrahmen (12), die sich in einer Vorwärts-RückwärtsRichtung einer Fahrzeugkarosserie (11) erstrecken, wobei die Verbindungskonstruktion für gekröpfte Rahmen (16) ein Querelement (15) zum Verbinden von hinteren Endabschnitten der Seitenrahmen (12) miteinander und ein Paar von Verstärkungselementen (17) umfasst, wobei die Verbindungskonstruktion für gekröpfte Rahmen **dadurch gekennzeichnet ist, dass**
der rechte und der linke gekröpfte Rahmen (16) an Positionen mit dem Querelement (15) verbunden sind, die in Bezug auf den rechten bzw. den linken Seitenrahmen (12) in einer Breitenrichtung der Fahrzeugkarosserie (11) einwärts versetzt sind,
jedes der Verstärkungselemente (17) mit einem hinteren Endabschnitt eines entsprechenden der Seitenrahmen (12), einem entsprechenden der rechten und linken Endabschnitte des Querelements (15) und einem vorderen Endabschnitt eines entsprechenden der gekröpften Rahmen (16) verbunden ist und
eine Position, an der eines der Verstärkungselemente (17) mit dem Querelement (15) verbunden ist, eine Position, an der dasselbe Verstärkungselement (17) mit einem entsprechenden der gekröpften Rahmen (16) verbunden ist, und eine Position, an der derselbe gekröpfte Rahmen (16) mit dem Querelement (15) verbunden ist, von oben betrachtet an verschiedenen Positionen angeordnet sind,
wobei die Verbindungskonstruktion für gekröpfte Rahmen **dadurch gekennzeichnet ist, dass**
die Seitenrahmen (12) und die gekröpften Rahmen (16) jeweils eine obere Wand, eine untere Wand und eine Seitenwand, durch welche die obere Wand mit der unteren Wand verbunden ist, umfassen, und
jedes der Verstärkungselemente (17) einen ersten Verbindungsabschnitt, einen zweiten Verbindungsabschnitt und einen dritten Verbindungsabschnitt aufweist, wobei der erste Verbindungsabschnitt mit der oberen Wand, der unteren Wand und der Seitenwand eines entsprechenden der Seitenrahmen (12) in dem hinteren Endabschnitt des Seitenrahmens (12) verbunden ist, der zweite Verbindungsabschnitt mit der oberen Wand, der unteren Wand und der Seitenwand eines entsprechenden der gekröpften Rahmen (16) in dem vorderen Endabschnitt des gekröpften Rahmens (16) verbunden ist und der dritte Verbindungsabschnitt mit einem oberen Abschnitt und einem unteren Abschnitt des Querelements (15) in einem entsprechenden aus der Gruppe umfassend den rechten und den linken Endabschnitt des Querelements (15) verbunden ist.

2. Verbindungskonstruktion für gekröpfte Rahmen nach Anspruch 1, **dadurch gekennzeichnet, dass** jedes Verstärkungselement (17) einen entsprechenden aus der Gruppe umfassend den rechten und den linken Endabschnitt des Querelements (15) abdeckt.

## Revendications

1. Structure de raccordement de châssis supérieur destinée à raccorder une paire de châssis supérieurs droit et gauche (16) à une paire de châssis latéraux droit et gauche (12) s'étendant dans une direction avant-arrière d'une carrosserie de véhicule (11), la structure de raccordement de châssis supérieur (16) comprenant une traverse (15) destinée à raccorder des parties d'extrémité arrière des châssis latéraux (12) l'une à l'autre et une paire d'éléments de renfort (17), la structure de raccordement de châssis supérieur étant **caractérisée en ce que**
les châssis supérieurs droit et gauche (16) sont raccordés à la traverse (15) dans des positions décalées vers l'intérieur par rapport aux châssis latéraux droit et gauche (12), respectivement, dans une direction en largeur de la carrosserie de véhicule (11),
chacun des éléments de renfort (17) est raccordé à une partie d'extrémité arrière de l'un correspondant des châssis latéraux (12), l'une correspondante de parties d'extrémité droite et gauche de la traverse (15), et une partie d'extrémité avant de l'un correspondant des châssis supérieurs (16), et
une position dans laquelle un des éléments de renfort (17) est raccordé à la traverse (15), une position dans laquelle le même élément de renfort (17) est raccordé à l'un correspondant des châssis supérieurs (16), et une position dans laquelle le même châssis supérieur (16) est raccordé à la traverse (15) sont prévues dans des positions différentes telles que vues de dessus,
la structure de raccordement de châssis supérieur étant **caractérisée en ce que**
les châssis latéraux (12) et les châssis supérieurs (16) comprennent chacun une paroi supérieure, une paroi inférieure, et une paroi latérale grâce à laquelle la paroi supérieure est raccordée à la paroi inférieure, et
chacun des éléments de renfort (17) a une première partie de jonction, une deuxième partie de jonction, et une troisième partie de jonction, la première partie de jonction étant raccordée à la paroi supérieure, à la paroi inférieure, et à la paroi latérale de l'un correspondant des châssis latéraux (12) dans la partie d'extrémité arrière du châssis latéral (12), la deuxième partie de jonction étant raccordée à la paroi supérieure, à la paroi inférieure, et à la paroi latérale de l'un correspondant des châssis supérieurs (16) dans la partie d'extrémité avant du châssis supérieur (16), et la troisième partie de jonction étant raccordée à la partie supérieure et une partie inférieure de la traverse (15) dans l'une correspondante des parties d'extrémité droite et gauche de la traverse (15).

2. Structure de raccordement de châssis supérieur selon la revendication 1, **caractérisée en ce que** chaque élément de renfort (17) recouvre l'une correspondante des parties d'extrémité droite et gauche de la traverse (15).
